# EUROPEAN PATENT SPECIFICATION

(11) **EP 0 382 481 B1**
(45) Date of publication and mention of the grant of the patent: **01.12.1993**
(21) Application number: 90301241.7
(22) Date of filing: 06.02.1990
(51) Int. Cl.: A61C 5/06

(54) **A capsule**
Kapsel
Capsule

(30) Priority: 06.02.1989 US 306471
(43) Date of publication of application: 16.08.1990
(73) Proprietor: Dragan, William B., Easton Connecticut 06612 (US)
(72) Inventor: Dragan, William B., Easton Connecticut 06612 (US)
(74) Representative: Bayliss, Geoffrey Cyril

(56) References cited:
- EP-A- 0 145 922
- GB-A- 795 630
- GB-A- 1 455 321
- US-A- 4 659 327
- US-A- 4 682 950

## Description

This invention relates to a capsule for use, for example, with a dental syringe device.

US-A-4,391,590 (DOUGHERTY) discloses a capsule comprising a cylindrical body having one end open and the other end closed, with an angled discharge nozzle at the closed end and a piston moveable along inside the capsule, the shape of the head of the piston substantially matching the shape of the inner surface of the capsule at the closed end.

The closed end of this known capsule has a hemispherical surface inside and out providing a constant or uniform wall thickness.

It has been noted that in the filling of such a capsule with a viscous material, there is a tendency to entrap air in the hemispherical end portion, and that the air tends to remain entrapped therein only to become entrained within the material as it is dispensed from the capsule. The dental material that is generally dispensed by capsules comprises a viscous composite resin dental filling material and the entrapment of any air within such material is considered to be highly detrimental to any tooth restoration made thereby. This is because the entrapment of any air in such composite resin filling material will result in voids being formed in the restoration, which voids weaken and/or cause premature failure.

In restoring a tooth with a composite resin filling material, it is therefore desirable that the entrapment of any air therein be held to the absolute minimum so as to effect a final restoration that is free of any air voids.

Another problem noted with capsules having a hemispherical front end is that visibility is obscured when placing the material with such a capsule in deep small areas. This is due to the hemispherical end obscuring the site where the material was to be placed; as the discharge nozzle through which the material was extruded would be obscured thereby.

Also, there has been a growing tendency in the art to formulate dental composite resin filling materials with a heavier or more viscous consistency. With such heavy bodied materials, it is imperative that the capsules for dispensing such material be made to withstand the tremendous pressures that occur when such viscous materials are to be extruded therefrom. Heretofore, the known capsule, having a uniform wall thickness throughout, did not compensate for the resistance of pressure in those areas where the pressures were maximized during an extruding operation; for example in the closed end of the capsule.

An object of this invention is to provide a capsule for use with a dental syringe which seeks to overcome those disadvantages of the known capsule.

The invention is characterised in that the inner surface of the capsule at the closed end has a frusto-conical shape forming a frusto-conical chamber and that the discharge nozzle has a passage with an inlet disposed contiguous to the closed end wall of the chamber to prohibit entrapment of air forwardly of the inlet of the nozzle passage.

In the accompanying drawings:
Figure 1 is a side elevation view, shown partly in section of a dental syringe and a capsule for use therewith;
Figure 2 is a perspective view of the capsule;
Figure 3 is a sectional view of the capsule illustrated in Figures 1 and 2; and
Figure 4 is a detail perspective view of the piston sealing the open end of the capsule.

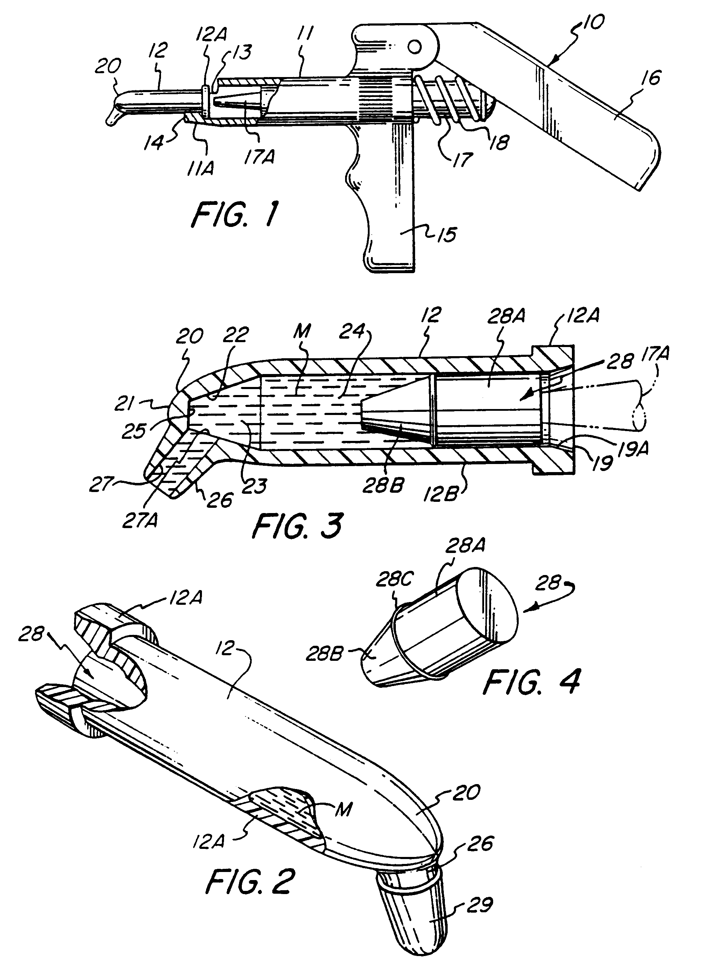

Referring to the drawings, Figure 1 illustrates a dental syringe 10 of a type disclosed in US-A-4,198, 756. Such a dental syringe 10 comprises an elongate barrell 11 having a front end portion 11A adapted to detachably hold a dental syringe capsule 12. The front end of the barrell 11 is provided with a cut-away portion to define a breech opening 13 in the upper part of the barrel. The front portion of the barrel 11, which is not cut-away, has an inturned flange 14 to define an internal shoulder to engage the flange 12A of the capsule. Connected to the barrel adjacent to the other end thereof is a handle or finger grip member 15. Pivotably connected to the handle 15 is an actuating lever 16 which is disposed to bear on a plunger 17 which is slidably disposed within the barrel 11. A spring 18 is interposed about the end of the plunger 17 and maintains the plunger 17 in a normally retracted position as shown in Figure 1. The front end of the plunger 17 is provided with a frustro-conical projection 17A.

The front end of the barrel 11 is sized or proportioned so as to frictionally retain the rear portion of the capsule 12 in the notched opening 13 formed therein. The shoulder or inturned flange 14 engages the flange 12A of the capsule 12 to prevent axial displacement of the capsule 12 during actuation of the syringe 10. The capsule 12 is forced into and held in place by the seat defined at the notched end of the barrel 10. To achieve a suitable friction fit of the capsule 12 in the front end of the barrel 11, the cut-out 13 is formed so that the circumscribing side walls of the barrel extend about the circumference of the syringe tip slightly more than 180°.

The capsule 12 comprises a generally cylindrical body portion 12B which has one end 19 which is fully open, and the other end 20 which is closed. The open end 19 has a conically-shaped lead in surface 19A. The exterior of the closed end 20 is generally of a rounded conical shape which tapers inwardly toward the apex 21. The front closed end 20 has a frusto-conical internal surface 22 which defines a frusto-conical internal chamber 23 which is axially aligned with and in open communication with the reservoir portion 24 defined by the cylindrical body portion 12B. The inner frusto-conical chamber 23 terminates in a flat end wall 25. Due to the roundness of the outer wall surface of the front end 20 and the angular interior surface 22 of the frustro-conical chamber 23, the wall thickness of the front end 20 varies, whereby the thickness of the side wall of the chamber progressively increases from the ends towards a point midway between the ends of the internal frusto-conical chamber 23. The variable thickness of the capsule wall at the closed end 20 reinforces the capsule 12 so as to resist the pressures which tend to build up on the closed end wall as material M is being extruded from the capsule. As the manufacturers of dental composite resin materials are producing a more viscous composite resin, the problem of pressure build-up on the end walls of the capsule 12 is aggravated. Thus, the described construction renders the capsule 12 compatible for use with the most viscous of known dental composite resin materials.

Formed as an integral part of the capsule 12 is a discharge nozzle 26 which is angularly disposed relative to the longitudinal axis of the body portion 12B. The nozzle 26 is provided with a passage 27 that is disposed in communication with the internal chamber 23. The angle of the passage 27 is such that its inlet end 27A is disposed immediately adjacent to the flat end wall 25, the plane of the end wall 25 forming a juncture with the inlet end 27A, so that no portion of the frusto-conical chamber 23 extends forwardly of the inlet 27A of the nozzle passage 27 that would otherwise form a pocket to entrap air which would ultimately be entrained in the material being extruded.

The open end 19 of the body portion 12B is sealed by a displaceable piston 28. The piston 28 includes a rear cylindrical portion 28A sized to be slidably received within the body of the capsule 12 and connected to a frusto-conical tip portion or head 28B. The frusto-conical tip portion 28B of the piston 28 is sized so as to closely match the shape of the internal chamber 23 of the capsule 12 so as to ensure maximum evacuation of the material M disposed within the capsule 12. At the base of the piston tip portion 28B, the piston 28 is provided with one or more circumscribing ribs or wipers 28C to provide a positive seal between the piston 28 and the internal wall of the capsule so as to prevent any back flow of the material M during an extruding operation.

In use, the capsule 12 is loaded in the breech opening 13 of the syringe 10 and the handle 15 and the lever 16 are grasped and squeezed together against the action of the spring 18. This forces the plunger 17 towards the capsule 12 until the end projection 17A engages the flat end face of the rear cylindrical portion 28A of the piston 28. Further movement of the plunger 17 forces the piston 28 along inside the capsule 12 so forcing material M inside the capsule out along the passageway 27 of the discharge nozzle 26.

Preferably, the capsule 12 described is formed of a molded plastics material which may comprise 101 Zytel nylon, or other suitable plastics materials such as polypropolene, depending upon the nature of the material to be extruded therefrom.

The capsule 12 may also be suitably coloured so as to identify the type of material contained therein or be rendered light resistant or light opaque for use with light activated materials which are currently in vogue. Also the capsule may be preloaded with a suitable material and sealed by means of an end cap 29 placed over the discharge orifice defined by the nozzle 26.

Loading of the capsule 12 described can be readily effected by inserting the material through the full open end 19 thereof. With the construction described, any air confined within the capsule during a loading operation will be vented or forced out of the nozzle 26, and no entrapment of air can occur when the capsule is fully loaded. In the event that the capsule is only partially loaded with dental material M, any air disposed between the material and the front end of the capsule will be evacuated before the material begins to be extruded. Thus, there are no entrapped air pockets by which air can be entrained in the dental material during an extrusion operation.

The conically shaped end 20 of the capsule 12 as described further enhances the visibility for the dentist when delivering the composite material to a tooth as the discharge nozzle 26 is not obscured. Also, since dentists inherently have to work in very close or small areas, the conically shaped end provides better access as well as better visibility in such situation. The frustro-conical internal chamber 23 at the closed end 20 of the capsule further allows better direction in funneling the material to be extruded toward the discharge nozzle 26, thereby minimizing the resistive forces that occur with very viscous type materials.

## Claims

1. A capsule (12) comprising a cylindrical body (12B) having one end (19) open and the other end (20) closed, with an angled discharge nozzle (26) at the closed end (20) and a piston (28) movable along inside the capsule, the shape of the head (28B) of the piston (28) closely matching the shape of the inner surface (22) of the capsule (12) at the closed end (20), characterised in that the inner surface (22) of the capsule (12) at the closed end (20) has a frusto-conical shape forming a frusto-conical chamber (23) and that the discharge nozzle (26) has a passage (27) with an inlet (27A) disposed contiguous to the closed end wall (25) of the chamber (23) to prohibit entrapment of air forwardly of the inlet (27A) of the nozzle passage.

2. A capsule (12) as claimed in claim 1, characterised in that the outer surface of the closed end (20) of the capsule (12) tapers inwardly towards the end.

3. A capsule (12) as claimed in claim 1 or 2, characterised in that the thickness between the inner (22) and outer surfaces of the closed end (20) of the capsule varies.

4. A capsule (12) as claimed in claim 3, characterised in that the thickness of the sidewall of the chamber (23) progressively increases from the ends towards a point midway between the ends of the chamber (23).

5. A capsule (12) as claimed in any preceding claim, characterised in that the piston (28) has one or more wipers (28C).

6. A capsule (12) as claimed in claim 5, characterised in that the wiper (28C) is disposed at the base of the head (28B) of the piston (28).

## Patentansprüche

1. Kapsel (12) mit einem zylindrischen Körper (12B) mit einem offenen (19) und einem geschlossenen Ende (20), mit einer abgewinkelten Austrittsdüse (26) am geschlossenen Ende (20) und einem im Inneren der Kapsel längs beweglichen Kolben (28), wobei die Form des Kopfes (28B) des Kolbens (28) der Form der Innenfläche (22) der Kapsel (12) am geschlossenen Ende genau angepaßt ist, **dadurch** **gekennzeichnet, daß** die Innenfläche (22) der Kapsel (12) am geschlossenen Ende (20) eine kegelstumpfförmige Gestalt besitzt, die eine kegelstumpfförmige Kammer (23) bildet, und die Austrittsdüse (26) einen Kanal (27) mit einem angrenzend an die geschlossene Endwand (25) der Kammer (23) angeordneten Einlaß (27A) besitzt, um einen Lufteinschluß vor dem Einlaß (27A) des Düsenkanals zu verhindern.

2. Kapsel (12) nach Anspruch 1, **dadurch gekennzeichnet,** **daß** sich die Außenfläche des geschlossenen Endes (20) der Kapsel (12) zum Ende hin einwärts verjüngt.

3. Kapsel (12) nach Anspruch 1 oder 2, **dadurch** **gekennzeichnet, daß** sich die Dicke zwischen der Innenfläche (22) und der Außenfläche des geschlossenen Endes (20) der Kapsel ändert.

4. Kapsel (12) nach Anspruch 3, **dadurch gekennzeichnet,** **daß** sich die Seitenwandstärke der Kammer (23) von den Enden zu einem Punkt in der Mitte zwischen den Enden der Kammer (23) hin fortlaufend vergrößert.

5. Kapsel (12) nach einem der vorhergehenden Ansprüche, **dadurch gekennzeichnet, daß** der Kolben (28) in einen oder mehrere Abstreifer (28C) besitzt.

6. Kapsel (12) nach Anspruch 5, **dadurch gekennzeichnet,** **daß** der Abstreifer (28C) an der Basis des Kopfes (28B) des Kolbens (28) angeordnet ist.

## Revendications

1. Capsule (12) comprenant un corps cylindrique (12B) comportant une extrémité (19) ouverte et l'autre extrémité (20) fermée, avec un ajutage de déchargement angulaire (26) à l'extrémité fermée (20) et une tige (28) mobile à l'intérieur de la capsule, la forme de la tête (28B) de la tige (28) correspondant étroitement à la forme de la surface intérieure (22) de la capsule (12) à l'extrémité fermée (20), caractérisée en ce que la surface intérieure (22) de la capsule (12) a l'extrémité fermée (20) a une forme tronconique formant une chambre tronconique (23) et en ce que l'ajutage de déchargement (26) comporte un passage (27) avec une entrée (27A) agencée de façon contiguë à la paroi d'extrémité fermée (25) de la chambre (23) pour empêcher tout emprisonnement d'air en avant de l'entrée (27A) du passage de l'ajutage.

2. Capsule (12) suivant la revendication 1, caractérisée en ce que la surface extérieure de l'extrémité fermée (20) de la capsule (12) va en s'effilant intérieurement en direction de l'extrémité.

3. Capsule (12) suivant l'une ou l'autre des revendications 1 et 2, caractérisée en ce que l'épaisseur entre les surface intérieure (22) et extérieure de l'extrémité fermée (20) de la capsule varie.

4. Capsule (12) suivant la revendication 3, caractérisée en ce que l'épaisseur de la paroi latérale de la chambre (23) augmente progressivement des extrémités vers un point à mi-distance entre les extrémités de la chambre (23).

5. Capsule (12) suivant l'une quelconque des revendications précédentes, caractérisée en ce que la tige (28) comporte un ou plusieurs racleurs (28C).

6. Capsule (12) suivant la revendication 5, caractérisée en ce que le racleur (28C) est disposé à la base de la tête (28B) de la tige (28).
